# EUROPEAN PATENT APPLICATION

(11) **EP 1 662 819 A1**
(43) Date of publication of application: **31.05.2006**
(21) Application number: 04425881.2
(22) Date of filing: 25.11.2004
(51) Int. Cl.: H04Q 7/30

(54) **A method and system for providing voice broadcast services in a cellular communication network, related network and computer program product**

(71) Applicant: Siemens Mobile Communications S.p.A., 20126 Milano (IT)
(72) Inventor: Bettoni, Pietro, 24060 Edine-gaiano (BG) (IT); Visconti, Giovanni, 20069 I-Vaprio d'Adda (IT)
(74) Representative: Giustini, Delio

(57) **Abstract**

A system for providing services of the voice broadcast type (e.g. ASCI, VGCS/VBS) over a cellular communication network by providing a common broadcast channel for each cell covered by the voice broadcast service. The system includes at least one switching center (MSC) configured for interfacing with respective base stations (BSS) for the cells of the network covered by the voice broadcast service. The switching center (MSC) configured for using only one interface channel to connect to each base station (BSS) controlling the cells of a certain ASCI call, whereby the voice broadcast function for the respective cells of the BSS is transferred to the base station (BSS) itself.

## Description

### Field of the invention

The present invention relates to techniques for providing services of the voice broadcast type in cellular communication networks.

More specifically, the invention was developed by paying attention to the possible application to providing services of the voice broadcast type (i.e. VGCS/VBS) in mobile communication networks, such as GSM mobile communication networks. As will become apparent from the following, reference to this possible field of application is in no way to be construed in a limiting sense of the scope of the invention.

### Description of the related art

As used herein, the designation "service of the voice broadcast type" is intended to apply to any service rendered over a communication network by means of which a voice signal generated by given user (usually called "the talker") is conveyed essentially simultaneously to a plurality of listeners. Such services usually also provide for the possibility, during a call, for one or more listeners to "intervene" by giving a response to the talker that is also heard by the other listeners, while also resolving possible conflicts between listeners that attempt at intervening simultaneously.

Such services were originally developed for certain users such as railway companies in order to permit e.g. control centers (train controllers) to broadcast messages to the people belonging to a certain group (for instance, all the train guards traveling aboard the trains in the service area). Use of these services is now being contemplated on a much broader scale e.g. for use by governmental emergency organizations and similar users that may be required to coordinate the activity of emergency forces (firemen, ambulances, and so on) on a very broad scale.

The implementation of ASCI (Advanced Speech Call Items) services within the context of e.g. a GSM mobile network requires for each cell of the service area one common broadcast channel, where the listener users in the cell are able to receive the speech of the talker. The relevant standards are essentially the 3GPP 48.008, 42.068, 42.069, 43.068, and 43.069 recommendations in their current R6 version.

These recommendations stipulate that for each cell of the ASCI call where a common broadcast channel exists there is an equivalent channel assigned between the Mobile Switching Center (MSC) and the Base Station Controller (BSC).

The increased number of cells expectedly involved when providing ASCI services to e.g. technical emergency organizations and similar users (e.g. firemen, ambulances, and so on) will lead to a corresponding increase in the amount of resources involved at the "A" Interface between BSS and MSC and at the "Ater" Interface between the Transcoder Unit and BSC.

### Object and summary of the invention

The object of the present document is thus to provide an improved technique that may permit to overcome the drawbacks highlighted in the foregoing. In that respect, those of skill in the art will promptly appreciate that, while certain problems are here considered by referring to typical GSM terminology, essentially similar if not identical problems arise whenever services such as Voice Group Call Service (VGCS) or Voice Breadcast Service (VBS) are provided in communications networks originally conceived to provide point-to-point communication.

According to the present invention, that object is achieved by means of a method having the features set forth in the claims that follow. The invention also relates to a corresponding system, a related communication network as well as a computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion. The claims constitute an integral part of the disclosure of the invention provided herein.

A preferred embodiment of the arrangement described herein thus provides a service of the voice broadcast type over a cellular communication network by providing a common broadcast channel for each cell covered by said service of the voice broadcast type. Specifically, such a service is rendered by:
- providing a switching center (e.g. MSC) interfacing with respective base stations (e.g. BSS) for the cells of the network covered by the service of the voice broadcast type, and
- using only one interface channel to connect the switching center to the respective base stations, whereby the voice broadcast function in each cell is transferred to the respective base station.

Such an arrangement makes it possible (when applied to a GSM context) to save channels on the "A" and therefore on the "Ater" interface using only one channel on these interfaces to connect the MSC to each Base Station System (BSS) which is controlling cells in the service area of that ASCI call; this means that the voice broadcast function in each cell of the BSS is now transferred to the BSS itself.

### Brief description of the annexed drawings

The invention will now be described, by way of example only, with reference to the enclosed figures of drawing, wherein:
- Figure 1 is a schematic representation of a mobile communication network of the GSM type as used for providing an ASCI call service in a railway context; and
- Figure 2 is a block diagram showing in detail a possible specific exemplary embodiment of the arrangement described herein.

### Detailed description of preferred embodiments of the invention

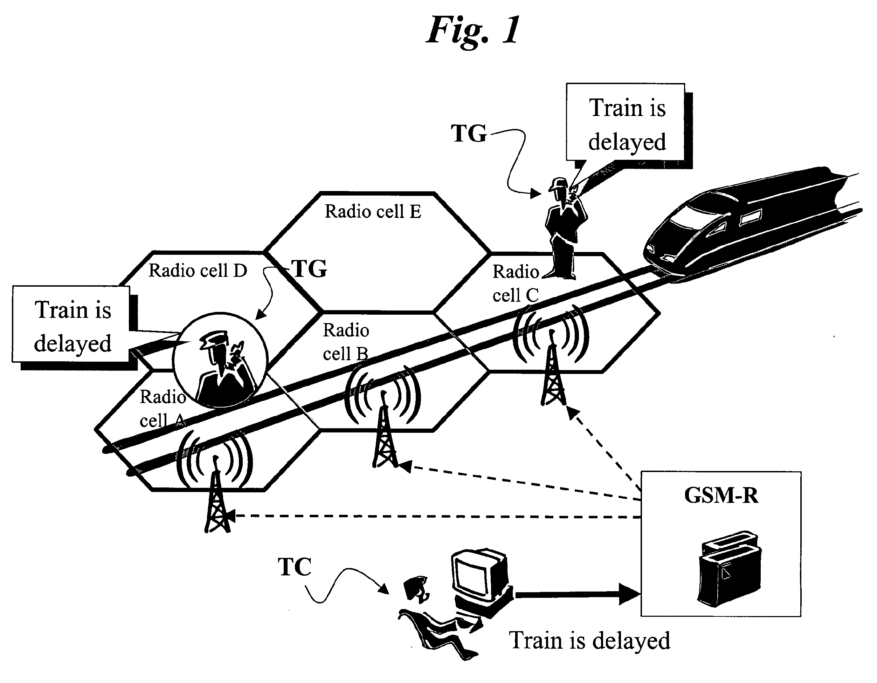

The functional block diagram of Figure 1 is exemplary of the typical layout of a mobile communication network of the GSM type as used for providing an ASCI call service in a railway context.

The service area (usually extending along the railway line served) includes a plurality of radio cells designated A, B, C, and so on.

As indicated in the introductory portion of this description, the contemplated application of these services on a much broader scale (e.g. for use by governmental emergency organizations and similar users) will generally involve a much larger amount of radio cells, notionally all the radio cells included in a mobile telephome network run by a certain operator.

The block diagram of Figure 1 shows the possibility for a control centers (train controller TC) of a railway company to connect to a GSM-R infrastructure to broadcast one or more messages (e.g. "The train is delayed") to the people belonging to a certain group. This may include, for instance, all the train guards TG traveling aboard the trains in the service area).

To that end, the train controller TC usually initiates a call to inform the persons designated TG, located in the service area and belonging to a certain group indentification, that the train is delayed.

In each cell A, B, C, ... of the service area a channel on the A-interface and a broadcast channel on the radio interface are established.

Once again it is hereby recalled that, the designation "service of the voice broadcast type" is used herein intended to mean any service rendered over a communication network by means of which a voice signal generated by given user (usually called "the talker") is conveyed essentially simultaneously to a plurality of listeners. Such services usually also provide for the possibility for one or more listeners to "intervene" by giving a response to the talker that is also heard by the other listeners, while also resolving possible conflicts between listeners that attempt at intervening simultaneously.

The exemplary embodiment of the invention described herein is intended to operate primarily between the Mobile Switching Center (MSC) and the Base Station System (BSS).

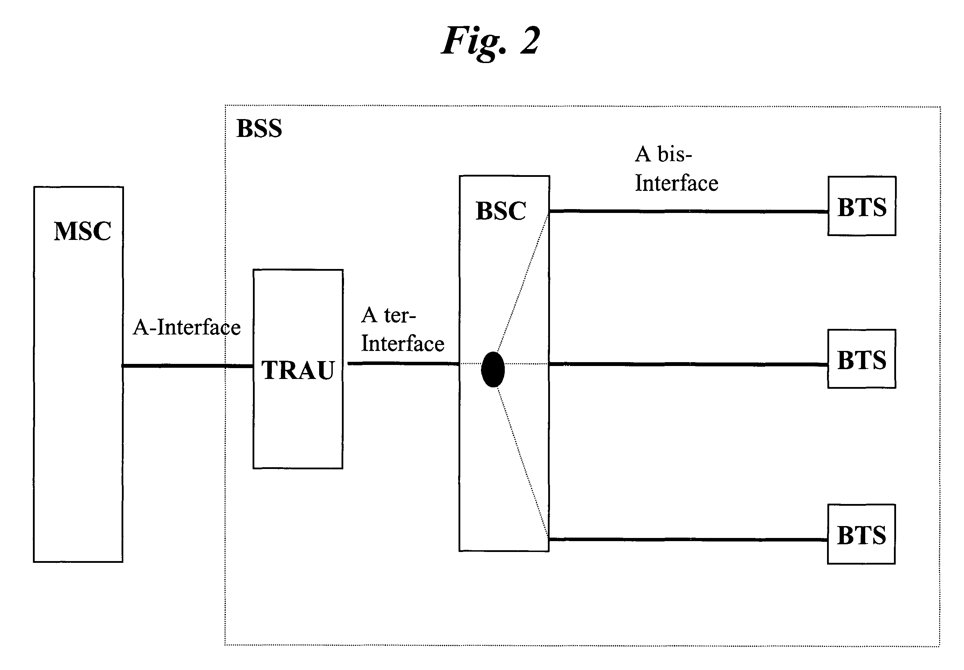

In that respect, the block diagram of Figure 2 shows the connection of a Mobile Switching Center (MSC) to a Base Station System (BSS). This typically occurs via a so-called A-interface coming down a Trancoder Unit (TRAU) included in the Base Station System (BSS).

The Transcoder Unit (TRAU) is in turn connected via a so-called Ater-interface to the Base Station Controller (BSC).

The arrangement described herein preferably operates at the "A" Interface between the Base Station System and the Mobile Switching Center and at the "Ater" Interface between the Transcoder Unit and the Base Station Controller.

Essentially, the arrangent described herein leads to the Base Station Controller acting as a broadcast point serving a plurarity of Base Transceiver Stations (BTSs) via respective Abis-interfaces.

To allow a desired channel optimization within the general concept of the invention, at least two alternative solutions can be resorted to.

In neither case are the messages on the "A" Interface modified.

In fact, the arrangement described herein only involves a modification of the existing procedures described in the relevant recommendation (3GPP TS 48.008), while, of course, also the relevant stage 1 (3GPP TS 42068/42069) and stage 2 (3GPP TS 43068/43069) Technical Standards for the Voice Group Call Service and Voice Broadcast Service (VGCS/VBS) shall reflect this possibility.

According to a first exemplary alternative considered herein, only one of the VGCS/VBS Assignment Request messages sent towards the various radio cells A, B, C, ... will include the CIC (Circuit Identity Code) to be used to assign the channel on the "A" Interface for the given BSS.

This is possible because that information element is already defined as an optional information element in Rec.48.008 for other purposes. As such, that information element can be either included or not included in the message.

The VGCS/VBS Assignment Request including the CIC shall not necessarily be the first one received by BSC; therefore a protection timer, starting when the first assignment not including the CIC message is received will be started by the BSC. In case the timer expires all the resources already assigned to the specific ASCI broadcast call must be released.

According to a second exemplary alternative considered herein, all the VGCS/VBS Assignment Request sent with reference to that ASCI call include the same CIC. In this case the BSC has no need to setup the protection timer but simply has to check if the received CIC are the same.

The two options considered in the foregoing refer to the selection of the circuit on the A-Interface performed by the Mobile Switching Center (MSC) - see the block diagram of Figure 2.

Otherwise, if the Base Station Controller (BSC) is responsible for that selection, the VGCS/VBS Assignment Request messages will not include the CIC and a similar approach will be instead applied to the CIC included in the relevant answers sent back by the BSC (VGCS/VBS Assignment Result) to the MSC that will have to performs the checks.

Those of skill in the art will appreciate that implementing either of the two simple modifications in the procedures for ASCI calls described above will lead to a significant reduction the operator's costs for leased lines. It will be similarly appreciated that, without resorting to such measures, the handling of a large number of cells for a certain number of ASCI calls will be practically unfeasible.

Again, exemplary embodiments of the invention have been described by referring to a typical GSM context, by referring to typical GSM terminology. However, the invention is applicable to other communication network contexts (e.g. a UMTS network) wherein essentially similar if not identical problems arise whenever the need is felt of providing services such as Voice Group Call Service (VGCS) or Voice Broadcast Service (VBS).
Consequently, without prejudice to the underlying principles of the invention, the details and the embodiments may vary, also appreciably, with reference to what has been described by way of example only, without departing from the scope of the invention as defined by the annexed claims. In that respect, it will be appreciated that the designations of certain parts of equipment (e.g. MSC, BSS, etc...) expressed in the claims by resorting to standard GSM terminology also apply to the homologous parts of equipment of cellular communication network operating according to standards other than GSM (e.g. so-called second and third generation systems).

## Claims

1. A method of providing a service of the voice broadcast type over a cellular communication network (A, B, C, D, E) by means of a common broadcast channel for each cell covered by said service of the voice broadcast type, the method including the steps of:
- providing a switching center (MSC) interfacing with respective base stations (BSS) for the cells of the network covered by said service of the voice broadcast type, and
- using only one interface channel to connect said switching center (MSC) to said respective base stations (BSS), whereby the voice broadcast function in each cell is transferred to said respective base station (BSS).

2. The method of claim 1, **characterized in that** it includes the steps of selecting said cellular communication network as a GSM network and performing said method at the "A" Interface between the Base Station System (BSS) and the Mobile Switching Center (MSC) and at the "Ater" Interface between the Transcoder Unit and the Base Station Controllers (BSC) of said GSM network.

3. The method of either of Claims 1 or 2, **characterized in that** it includes the steps of:
- sending assignment request messages for said service of the voice broadcast type towards the cells covered by said service, and
- including a circuit identity code (CIC) to assign said channel for a given base station (BSC) in only one of said assignment request messages.

4. The method of Claim 3, **characterized in that** it includes the steps of:
- including said circuit identity code (CIC) in one of said assignment request messages that is not necessarily the first assignment request message sent,
- starting a protection timer when said first assignment request message sent is received, and
- releasing all the resources already assigned to said request in case said timer expires.

5. The method of either of Claims 1 or 2, **characterized in that** it includes the steps of:
- sending assignment request messages for said service of the voice broadcast type towards the cells coverd by said service, and
- including an identical circuit identity code (CIC) to assign said channel for a given base station (BSC) in all of said assignment request messages; and
- performing respective checks within said base station (BSC), and if one of the circuit identity codes (CIC) is different or missing, sending a failure message to said Mobile Switching Center (MSC).

6. The method of either of Claims 1 or 2, **characterized in that** it includes the steps of:
- sending assignment result messages for said service of the voice broadcast type from the cells covered by said service, and
- including a circuit identity code (CIC) to assign said channel for a given base station (BSC) in only one of said assignment result messages in order to perform an assignment controlled by the base station (BSC).

7. The method of either of Claims 1 or 2, **characterized in that** it includes the steps of:
- sending assignment result messages for said service of the voice broadcast type from the cells coverd by said service, and
- including an identical circuit identity code (CIC) to assign said channel for a given base station (BSC) in all of said assignment result messages in order to perform an assignment controlled by the base station (BSC)

8. A system for providing services of the voice broadcast type over a cellular communication network by means of a common broadcast channel for each cell covered by said service of the voice broadcast type, the system including:
- at least one switching center (MSC) configured for interfacing with respective base stations (BSS) for the cells of the network covered by said service of the voice broadcast type,
- said at least one switching center (MSC) configured for using only one interface channel to connect to said respective base stations (BSS), and
- said respective base stations (BSS) configured for performing the voice broadcast function within the respective cell.

9. The system of claim 8, for use in a cellular communication network of the GSM type, **characterized in that** it includes said at least one switching center (MSC) and the Base Station System (BSS) of said GSM network configured for interfacing via said only one channel at the "A" Interface between the Base Station System (BSS) and the Mobile Switching Center (MSC) and at the "Ater" Interface between the Transcoder Unit and the Base Station Controller (BSC).

10. The system of either of Claims 8 or 9, **characterized in that** it includes said at least one switching center (MSC) configured for:
- sending assignment request messages for said service of the voice broadcast type towards the cells covered by said service, and
- including a circuit identity code (CIC) to assign said channel for a given base station (BSC) in only one of said assignment request messages.

11. The system of Claim 10, **characterized in that** it includes said at least one switching center (MSC) configured for including said circuit identity code (CIC) in one of said assignment request messages that is not necessarily the first assignment request message sent.

12. The system of either of Claims 8 or 9, **characterized in that** it includes said at least one switching center (MSC) configured for:
- sending assignment request messages for said service of the voice broadcast type towards the cells coverd by said service,
- including an identical circuit identity code (CIC) to assign said channel for a given base station (BSC) in all of said assignment request messages.

13. The system of either of Claims 8 or 9, **characterized in that** it includes said base stations (BSC) associated with said cells configured for:
- sending assignment result messages for said service of the voice broadcast type from the cells covered by said service, and
- including a circuit identity code (CIC) to assign said channel for a given base station (BSC) in only one of said assignment result messages in order to perform an assignment controlled by the base station (BSC).

14. The system of either of Claims 8 or 9, **characterized in that** it includes said base stations (BSC) associated with said cells configured for:
- sending assignment result messages for said service of the voice broadcast type from the cells covered by said service, and
- including an identical circuit identity code (CIC) to assign said channel for a given base station (BSC) in all of said assignment result messages in order to perform an assignment controlled by the base station (BSC).

15. A cellular communication network configured for providing services of the voice broadcast type over a cellular communication network by providing a common broadcast channel for each cell covered by said service of the voice broadcast type, and including a system according to any one of claims 8 to 14.

16. A computer program product, loadable in the memory of at least one computer and including software code portions for performing the method of any of claims 1 to 7.
